# DEMANDE DE BREVET EUROPEEN

(11) **EP 4 286 135 A1**
(43) Date de publication de la demande: **06.12.2023**
(21) Numéro de dépôt: 23175519.0
(22) Date de dépôt: 25.05.2023
(51) Int. Cl.: B29C 48/154, B29C 48/34, B29C 48/66, B29C 48/385, B29C 48/06, B29C 48/21, B29C 48/29, B29C 48/285

(54) **PROCÉDÉ DE FABRICATION D'UN CÂBLE ÉLECTRIQUE PAR EXTRUSION D'UNE COMPOSITION À BASE D'UN POLYMÈRE THERMOPLASTIQUE, DE LIQUIDE DIÉLECTRIQUE ET DE NANOCHARGES DISTRIBUÉES DE MANIÈRE HOMOGÈNE**

(30) Priorité: 31.05.2022 FR 2205191
(71) Demandeur: Nexans, 92400 Courbevoie (FR)
(72) Inventeur: PEREGO, Gabriele, 20144 Milan (IT); MAZEL, Christelle, 38300 Ruy (FR)
(74) Mandataire: Ipsilon

(57) **Abrégé**

L'invention concerne un procédé de fabrication d'un câble électrique caractérisé en ce qu'il comprend au moins les étapes suivantes :
i) une étape de mélange d'une composition d'extrusion comprenant au moins un polymère thermoplastique sous forme de particules solides, un liquide diélectrique et au moins une nanocharge,
ii) une étape d'introduction de ladite composition d'extrusion dans une zone d'alimentation d'une vis barrière située à l'entrée d'une extrudeuse, et
iii) une étape d'application au niveau d'une tête de l'extrudeuse de la composition d'extrusion issue de l'étape ii) autour d'un élément électriquement conducteur allongé,
ledit procédé étant caractérisé en ce que l'étape de mélange i) comprend une étape de prémélange du liquide diélectrique avec ladite au moins une nanocharge permettant d'obtenir une composition intermédiaire qui est ensuite mélangée audit au moins un polymère thermoplastique pour obtenir la composition d'extrusion.

## Description

### Domaine technique

La présente invention concerne un procédé de fabrication d'un câble électrique, notamment du type câble d'énergie, comprenant une couche thermoplastique extrudée obtenue à partir d'une composition comprenant un liquide diélectrique, au moins un polymère thermoplastique ainsi qu'au moins une nanocharge.

L'invention concerne également un câble obtenu par ledit procédé de fabrication.

Elle s'applique typiquement mais non exclusivement aux câbles électriques destinés au transport d'énergie, notamment aux câbles d'énergie à moyenne tension (notamment de 6 à 45-60 kV) ou à haute tension (notamment supérieure à 60 kV, et pouvant aller jusqu'à 400 kV), qu'ils soient en courant continu ou alternatif, dans les domaines du transport d'électricité aérien, sous-marin, terrestre, ou encore de l'aéronautique.

Un câble de transport d'énergie à moyenne ou à haute tension comprend généralement de l'intérieur vers l'extérieur :
- un élément électriquement conducteur allongé, notamment en cuivre ou en aluminium ;
- une couche semi-conductrice interne entourant ledit élément électriquement conducteur allongé ;
- une couche électriquement isolante entourant ladite couche semi-conductrice interne ;
- une couche semi-conductrice externe entourant ladite couche isolante ; et
- éventuellement une gaine de protection électriquement isolante entourant ladite couche semi-conductrice externe.

### Arrière-plan technologique

Il est connu qu'une distribution homogène de nanocharges, ou en d'autres termes une charge de dimension nanométrique, permet d'obtenir une couche électriquement isolante d'un câble électrique permet d'obtenir une résistivité volumique plus élevée et de réduire le phénomène d'accumulation de charge d'espace. De plus, les nanocharges distribuées de manière homogène peuvent augmenter la résistance au claquage diélectrique en courant alternatif et continu des composés isolants.

Lors de la fabrication de la couche isolante, le polymère thermoplastique sous forme de particules solides, le liquide diélectrique et les nanocharges sont mélangés ensemble, puis introduits dans une extrudeuse pour l'application de la couche isolante sur un conducteur électrique.

Il est notamment connu du document WO2018234697 A1 un procédé de fabrication d'une telle couche dans laquelle les granulés de polymère thermoplastique sont imprégnés avec le liquide diélectrique et ensuite mélangés avec les nanocharges avant d'introduire la composition obtenue dans l'extrudeuse.

Il a été observé qu'une agglomération des particules de nanocharges pouvaient intervenir et former des particules de taille supérieure dans la composition. Or, la présence de particules de nanocharges inorganiques de grande taille induits des effets bien plus néfastes que les bénéfices obtenus par l'incorporation de nanocharges distribuées de manière homogène.

En effet, les particules de grande taille induisent un changement local du champ électrique et une potentielle interface dégradée entre la particule inorganique et la matrice polymère.

Les nanocomposites induisent une amélioration des propriétés électriques car le champ électrique est modulé par les nanoparticules. En particulier, dans une applications haute tension (HVDC en anglais pour « High Voltage Direct Current »), les nanocomposites bénéficient de phénomènes de charge d'espace plus faibles et d'une résistivité volumique plus élevée.

Cependant, il est important d'exclure la présence de grands agglomérats de particules, car celles-ci agiraient comme de grandes particules inorganiques, avec une déviation locale excessive du champ électrique et l'apparition de phénomènes de dégradation électrique à l'interface.

Il existe donc un besoin pour un procédé de fabrication d'une couche isolante permettant une distribution homogène de nanocharges dans la couche isolante de manière à obtenir une résistance au claquage diélectrique en courant alternatif et continu, une résistivité volumique et une réduction du phénomène d'accumulation de charge d'espace plus élevées que pour une couche isolante sans nanocharges.

### Résumé de l'invention

Pour cela, l'invention propose un procédé de fabrication d'un câble électrique comprenant au moins un élément électriquement conducteur allongé et au moins une couche thermoplastique extrudée entourant ledit élément électriquement conducteur allongé, ledit procédé mettant en oeuvre un dispositif comprenant au moins une extrudeuse contenant un fourreau, une vis barrière et une tête d'extrudeuse, caractérisé en ce qu'il comprend au moins les étapes suivantes :
i) une étape de mélange d'une composition d'extrusion comprenant au moins un polymère thermoplastique sous forme de particules solides, un liquide diélectrique et au moins une nanocharge,
ii) une étape d'introduction de ladite composition d'extrusion dans une zone d'alimentation de la vis barrière située à l'entrée de l'extrudeuse, et
iii) une étape d'application au niveau de la tête de l'extrudeuse de la composition d'extrusion issue de l'étape ii) autour de l'élément électriquement conducteur allongé,
   ledit procédé étant caractérisé en ce que l'étape de mélange i) comprend une étape de prémélange du liquide diélectrique avec ladite au moins une nanocharge permettant d'obtenir une composition intermédiaire qui est ensuite mélangée audit au moins un polymère thermoplastique pour obtenir la composition d'extrusion.

Le prémélange des nanocharges dans le liquide diélectrique permet d'assurer une distribution homogène des nanocharges dans le liquide diélectrique ce qui permet d'obtenir ensuite une distribution homogène des nanocharges dans la composition d'extrusion. Le prémélange permet à chacune des nanocharge d'être entourée par une couche de liquide diélectrique et ainsi d'être séparée du reste des nanocharges pour réduire l'agglomération. La couche d'isolation extrudée au moyen de l'extrudeuse présente ainsi une résistance au claquage diélectrique en courant alternatif et continu, une résistivité volumique et une réduction du phénomène d'accumulation de charge d'espace plus élevées que pour une couche isolante sans nanocharges.

Le prémélange des nanocharges avec le liquide diélectrique permet également de réaliser une éventuelle étape de filtration de la composition intermédiaire afin de réduire le taux d'impuretés dans la composition. Cette étape de filtration est possible car la faible viscosité du liquide diélectrique permet une filtration fine. A contrario, un mélange polymérique présente une viscosité supérieure ce qui ne permet pas cette filtration sauf à augmenter de manière importante la pression de cette composition.

Un tel prémélange est spécifique à l'utilisation de polymères thermoplastiques. En effet, un tel prémélange dans le cas d'une couche à base de polyéthylène réticulé provoquerait une mauvaise réticulation car des réactions privilégiées interviendraient entre les radicaux libres et les liaisons du peroxyde.

Selon un mode de réalisation du procédé de fabrication, ladite au moins une nanocharge présente au moins une dimension maximale inférieure ou égale à 1000 nm.

Selon un mode de réalisation du procédé de fabrication, ladite au moins une nanocharge est une charge minérale, de préférence choisie parmi les carbonates de métaux alcalino-terreux, les sulfates de métaux alcalino-terreux, les oxydes métalliques, les oxydes de métalloïdes, les silicates métalliques, et les siloxanes.

Selon un mode de réalisation du procédé de fabrication, le liquide diélectrique est une huile.

Selon un mode de réalisation du procédé de fabrication, ladite huile est une huile minérale.

Selon un mode de réalisation du procédé de fabrication, ledit au moins un polymère thermoplastique est choisi parmi un homopolymère de propylène et un copolymère de propylène.

Selon un mode de réalisation du procédé de fabrication, le copolymère de propylène est un copolymère hétérophasé de propylène, un copolymère statistique de propylène ou un de leurs mélanges.

Selon un mode de réalisation du procédé de fabrication, la composition d'extrusion comprend en outre un polyéthylène sous forme solide.

Selon un mode de réalisation du procédé de fabrication, la pression lors de l'étape ii) est d'au plus 5 bars, de préférence d'au plus 3 bars, et de préférence d'au plus 1,5 bars.

Selon un mode de réalisation du procédé de fabrication, l'étape de prémélange est réalisée par un mélangeur distinct de l'extrudeuse.

Selon un mode de réalisation du procédé de fabrication, le mélangeur est un turbo-mélangeur ou un mélangeur fermé.

Selon un mode de réalisation du procédé de fabrication, l'étape de mélange comprend en outre une étape de filtration de la composition intermédiaire pour filtrer des impuretés présentes dans la composition intermédiaire.

Il est en effet plus simple et plus efficace de réaliser une filtration des impuretés présentes dans les nanocharges sous forme de poudre lorsque celles-ci sont incorporées dans un liquide, ici le liquide diélectrique.

L'invention propose également un câble électrique comprenant au moins un élément électriquement conducteur allongé et au moins une couche thermoplastique extrudée entourant ledit élément électriquement conducteur allongé, caractérisé en ce qu'il est obtenu selon un procédé de fabrication tel que défini ci-avant.

### Brève description des figures

La description qui va suivre en regard des dessins annexés, donnés à titre d'exemples non limitatifs, fera bien comprendre en quoi consiste l'invention et comment elle peut être réalisée. Sur les figures annexées :
[fig. 1] La figure 1, représente schématiquement une vue partiellement en coupe d'une extrudeuse comprenant notamment une vis d'extrusion et un fourreau.
[fig. 2] La figure 2, représente schématiquement une vue partiellement en coupe et en perspective d'un câble électrique obtenu avec l'extrudeuse de la figure 1.

### Description de mode(s) de réalisation

Pour des raisons de clarté, seuls les éléments essentiels pour la compréhension de l'invention ont été représentés de manière schématique sur ces figures, et ceci sans respect de l'échelle.

Le concept de l'invention est décrit plus complètement ci-après avec référence aux dessins joints, sur lesquels des modes de réalisation du concept de l'invention sont montrés. Sur les dessins, la taille et les tailles relatives des éléments peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier.

Une référence dans toute la spécification à « un mode de réalisation » signifie qu'une fonctionnalité, une structure, ou une caractéristique particulière décrite en relation avec un mode de réalisation est incluse dans au moins un mode de réalisation de la présente invention. Ainsi, l'apparition de l'expression « dans un mode de réalisation » à divers emplacements dans toute la spécification ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation. De plus, le terme « comprenant » n'exclut pas d'autres éléments ou étapes.

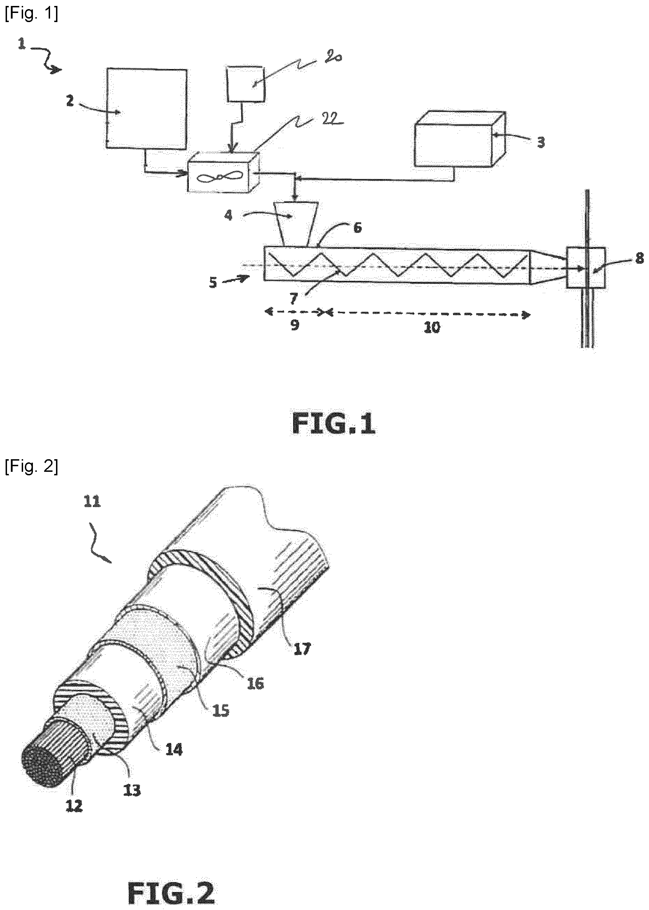

Sur la figure 1, une installation de fabrication 1 d'une couche isolante d'un câble électrique comprend un premier container 2 alimenté par un liquide diélectrique, un deuxième container 20 alimenté en nanocharges et un troisième container 3 alimenté par un polymère thermoplastique.

Le polymère thermoplastique, le liquide diélectrique et les nanocharges sont destinées à être mélangées pour obtenir une composition d'extrusion à introduire dans une extrudeuse 5. Le dispositif 1 peut également comprendre une trémie d'alimentation 4 pouvant être alimentée par la composition d'extrusion.

Les nanocharges et le liquide diélectrique sont prémélangés dans un mélangeur 22 pour obtenir une composition intermédiaire. Le mélangeur 22 est de préférence un turbo-mélangeur ou un mélangeur fermé. Le mélangeur 22 est de préférence distinct de l'extrudeuse 5. Le mélangeur 22 comprend notamment une cavité de réception dans laquelle une hélice ou turbine permet un mélange à haute vitesse. L'hélice ou la turbine peut comprendre une pluralité de couteaux ayant des orientations différentes pour favoriser le brassage de la composition intermédiaire.

La composition intermédiaire comprenant le liquide diélectrique et les nanocharges est ensuite mélangée au polymère thermoplastique avant ou au moment de leur introduction dans l'extrudeuse 5. Ce mélange de la composition intermédiaire et du polymère thermoplastique peut être réalisé au niveau de la trémie d'alimentation 4 ou à l'intérieur de l'extrudeuse 5.

Les nanocharges et le liquide diélectrique sont donc mélangées ensemble avant d'être mélangés au polymère thermoplastique.

Le prémélange des nanocharges dans le liquide diélectrique permet d'assurer une distribution homogène des nanocharges dans le liquide diélectrique ce qui permet d'obtenir ensuite une distribution homogène des nanocharges dans la composition d'extrusion. La couche d'isolation extrudée au moyen de l'extrudeuse 5 présente ainsi une résistance au claquage diélectrique en courant alternatif et continu, une résistivité volumique et une réduction du phénomène d'accumulation de charge d'espace plus élevées que pour une couche isolante sans nanocharges.

Le polymère thermoplastique se présente de préférence sous la forme de particules solides, appelés pellets ou granulés. Le polymère thermoplastique est de préférence un thermoplastique à base de propylène comme un homopolymère de propylène ou un copolymère de propylène. Le copolymère de propylène peut être un copolymère hétérophasé de propylène, un copolymère statistique de propylène ou un de leurs mélanges.

Le choix du liquide diélectrique dépend de l'application envisagée (i.e. du type d'équipement électrique) et de sa compatibilité avec l'isolant solide qu'il est censé imprégner et/ou avec lequel il forme un mélange intime. Parmi les liquides diélectriques conventionnels, on peut citer les huiles minérales (e.g . huiles naphténiques, huiles paraffiniques, huiles aromatiques ou huiles polyaromatiques), les huiles végétales (e.g. huile de soja, huile de lin, huile de colza, huile de maïs ou huile de ricin) ou les huiles synthétiques telles que les hydrocarbures aromatiques (alkylbenzènes, alkylnaphtalènes, alkylbiphényles, alkydiaryléthylènes, etc.), les huiles de silicone, les éther-oxydes, les esters organiques ou les hydrocarbures aliphatiques.

Les nanocharges peuvent se présenter sous forme de poudre. Les nanocharges comprennent par exemple au moins une charge minérale, de préférence choisie parmi les carbonates de métaux alcalino-terreux, les sulfates de métaux alcalino-terreux, les oxydes métalliques, les oxydes de métalloïdes, les silicates métalliques, et les siloxanes. Plusieurs types de nanocharge peuvent être utilisés dans la composition intermédiaire.

Les nanocharges ont de préférence un dimension maximale inférieure ou égale à 1000 nm.

L'extrudeuse 5 comprend par exemple un fourreau 6 et une vis barrière 7, ainsi qu'une tête d'extrudeuse 8. L'extrudeuse 5 peut être une extrudeuse à deux vis, une extrudeuse de type extrudeuse Buss ou une extrudeuse à vis unique.

La composition d'extrusion est introduite dans une zone d'alimentation 9 de la vis 7 vers une ou plusieurs zones intermédiaires 10 permettant la fusion graduelle du polymère thermoplastique, lesdites zones intermédiaires 10 étant situées entre la zone d'alimentation 9 et la tête d'extrudeuse 8.

Enfin, au niveau de la tête d'extrudeuse 8, la composition est appliquée autour d'un élément électriquement conducteur allongé.

Sur la figure 2, le câble d'énergie 11 à moyenne ou haute tension obtenu selon le procédé de l'invention, comprend un élément électriquement conducteur allongé central 12, notamment en cuivre ou en aluminium, et, successivement et coaxialement comprend autour de cet élément 12, une première couche semi-conductrice 13 dite « couche semi-conductrice interne », une couche électriquement isolante 14, une deuxième couche semi conductrice 15 dite « couche semi-conductrice externe », un écran métallique 16 du type tube cylindrique, et une gaine extérieure de protection 17, la couche électriquement isolante 14 étant obtenue à partir d'une composition comprenant au moins un polymère thermoplastique choisi parmi un homopolymère de propylène et un copolymère de propylène, et un liquide diélectrique selon un procédé d'extrusion tel que défini dans l'invention.

Les couches 13 et 15 sont des couches extrudées par des procédés bien connus de l'homme du métier. La présence de l'écran métallique 16 et de la gaine extérieure de protection 17 est préférentielle, mais non essentielle.

## Revendications

1. Procédé de fabrication d'un câble électrique (11) comprenant au moins un élément électriquement conducteur allongé (12) et au moins une couche thermoplastique extrudée (14) entourant ledit élément électriquement conducteur allongé, ledit procédé mettant en oeuvre un dispositif comprenant au moins une extrudeuse -5) contenant un fourreau (6), une vis barrière (7) et une tête d'extrudeuse (8), **caractérisé en ce qu'**il comprend au moins les étapes suivantes :
i) une étape de mélange d'une composition d'extrusion comprenant au moins un polymère thermoplastique sous forme de particules solides, un liquide diélectrique et au moins une nanocharge,
ii) une étape d'introduction de ladite composition d'extrusion dans une zone d'alimentation de la vis barrière située à l'entrée de l'extrudeuse, et
iii) une étape d'application au niveau de la tête de l'extrudeuse de la composition d'extrusion issue de l'étape ii) autour de l'élément électriquement conducteur allongé,
ledit procédé étant **caractérisé en ce que** l'étape de mélange i) comprend une étape de prémélange du liquide diélectrique avec ladite au moins une nanocharge permettant d'obtenir une composition intermédiaire qui est ensuite mélangée audit au moins un polymère thermoplastique pour obtenir la composition d'extrusion.

2. Procédé selon la revendication 1, dans lequel ladite au moins une nanocharge présente au moins une dimension maximale inférieure ou égale à 1000 nm.

3. Procédé selon la revendication 1 ou 2, dans lequel ladite au moins une nanocharge est une charge minérale, de préférence choisie parmi les carbonates de métaux alcalino-terreux, les sulfates de métaux alcalino-terreux, les oxydes métalliques, les oxydes de métalloïdes, les silicates métalliques, et les siloxanes.

4. Procédé selon l'une quelconque des revendications précédentes, dans lequel le liquide diélectrique est une huile.

5. Procédé selon la revendication 4, dans lequel ladite huile est une huile minérale.

6. Procédé selon l'une quelconque des revendications précédentes, dans lequel ledit au moins un polymère thermoplastique est choisi parmi un homopolymère de propylène et un copolymère de propylène.

7. Procédé selon la revendication 6, dans lequel le copolymère de propylène est un copolymère hétérophasé de propylène, un copolymère statistique de propylène ou un de leurs mélanges.

8. Procédé selon l'une quelconque des revendications précédentes, dans lequel la composition d'extrusion comprend en outre un polyéthylène sous forme solide.

9. Procédé selon l'une quelconque des revendications précédentes, dans lequel la pression lors de l'étape ii) est d'au plus 5 bars, de préférence d'au plus 3 bars, et de préférence d'au plus 1,5 bars.

10. Procédé selon l'une quelconque des revendications précédentes, dans lequel l'étape de prémélange est réalisée par un mélangeur (22) distinct de l'extrudeuse.

11. Procédé selon la revendication 10, dans lequel le mélangeur (22) est un turbo-mélangeur ou un mélangeur fermé.

12. Procédé selon l'une quelconque des revendications précédentes, dans lequel l'étape de mélange comprend en outre une étape de filtration de la composition intermédiaire pour filtrer des impuretés présentes dans la composition intermédiaire.

13. Câble électrique (11) comprenant au moins un élément électriquement conducteur allongé (12) et au moins une couche thermoplastique extrudée (14) entourant ledit élément électriquement conducteur allongé, **caractérisé en ce qu'**il est obtenu selon un procédé de fabrication tel que défini à l'une quelconque des revendications précédentes.
